# EUROPÄISCHE PATENTSCHRIFT

(11) **EP 0 336 016 B1**
(45) Veröffentlichungstag und Bekanntmachung des Hinweises auf die Patenterteilung: **07.04.1993**
(21) Anmeldenummer: 88121078.5
(22) Anmeldetag: 16.12.1988
(51) Int. Cl.: F16J 15/40

(54) **Ferrofluiddichtung**
Ferrofluid sealing
Joint à fluide magnétique

(30) Priorität: 02.04.1988 DE 3811227
(43) Veröffentlichungstag der Anmeldung: 11.10.1989
(73) Patentinhaber: Firma Carl Freudenberg, 69469 Weinheim (DE)
(72) Erfinder: Vogt, Rolf, D-6836 Oftersheim (DE); Spies, Karl Heinrich, Dr., D-6943 Birkenau (DE); Kilthau, Gerhard, Dr., D-6800 Mannheim 51 (DE); Freiländer, Peter, Dr., D-6800 Mannheim 31 (DE); Seethaler, Toni, Dr., D-6946 Gorxheimertal 1 (DE)

(56) Entgegenhaltungen:
- DE-A- 2 034 213
- US-A- 4 671 679

## Beschreibung

Die Erfindung betrifft eine Ferrofluiddichtung, bei der die relativ verdrehbaren Dichtungsringe einen die Rotationsachse einer Welle konzentrisch umschließenden Spalt begrenzen, wobei in dem Spalt ein Ferrofluid angeordnet und durch das Magnetfeld eines Permanentmagneten festgehalten ist.

Eine Ferrofluiddichtung der vorgenannten Art ist aus der DE-A-20 34 213 bekannt. Der das Ferrofluid enthaltende Spalt hat dabei eine achsparallele Erstreckung, was nicht nur eine große axiale Baulänge der Dichtung bedingt, sondern die Dichtung darüber hinaus empfindlich macht im Hinblick auf das Auftreten betriebsbedingter Wellenverlagerungen in radialer Richtung. Diese haben parallel zu der sich an einer Stelle des Umfanges ergebenden radialen Aufweitung des Spaltes eine Schwächung der Dichte des Magnetfeldes an dieser Stelle zur Folge, wodurch die auf das Ferrofluid ausgeübte Haltekraft des Magnetfeldes geschwächt wird und Undichtigkeiten der Dichtung verursacht werden können.

Der Erfindung liegt die Aufgabe zugrunde, eine Ferrofluiddichtung der eingangs genannten Art derart weiterzuentwickeln, daß sich bei verkürzter Baulänge in axialer Richtung eine größere Unempfindlichkeit im Hinblick auf das betriebsbedingte Auftreten von Wellenverlagerungen in radialer Richtung ergibt.

Diese Aufgabe wird erfindungsgemäß bei einer Ferrofluiddichtung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Ferrofluiddichtung ist der Spalt, in welchem das Ferrofluid enthalten ist, an wenigstens einer Stelle seiner axialen Erstreckung radial nach außen offen und dort durch Flächen der Dichtungsringe begrenzt, die in axialer Richtung einen Abstand (A) voneinander haben, der so gering bemessen ist, daß die auf das in dem Spalt befindliche Ferrofluid ausgeübte Haltekraft des Magnetfeldes, die sich während der bestimmungsgemäßen Verwendung ergebende Fliehkraft um wenigstens das 20fache übersteigt. Der in dem Spalt befindliche Flüssigkeitsring aus Ferrofluid ist hierdurch in einer ausgezeichneten Weise vor einem fliehkraftbedingten Verlust geschützt, wodurch er langfristig verfügbar ist und Fremdstoffen ein Passieren des spaltes verwehrt.

Die den Spalt der erfindungsgemäßen Dichtung begrenzenden Flächen der beiden Dichtungsringe sind der Rotationsachse der abzudichtenden Welle nicht mehr parallel, sondern in einer senkrechten Weise zugeordnet. Die axiale Ausdehnung der Dichtung ist dadurch deutlich reduziert und erlaubt eine Verwendung in Anwendungsbereichen, in denen in axialer Richtung nur sehr wenig Platz verfügbar ist.

Der senkrechte Abstand der den Spalt begrenzenden Flächen der beiden Dichtungsringe erfährt dann keinerlei Veränderung beim Auftreten radialer Wellenverlagerungen, wenn die Flächen der Wellenachse unter einem rechten Winkel zugeordnet sind. Eine entsprechende Ausbildung der Dichtung eignet sich daher besonders gut für Anwendungsfälle, in denen betriebsbedingt mit erheblichen Relativverlagerungen der abzudichtenden Welle in radialer Richtung zu rechnen ist. Sie wird im Rahmen der vorliegenden Erfindung bevorzugt.

Der vorstehend angesprochene Spalt, in welchem das enthaltene Ferrofluid durch die Kraft eines Magnetfeldes an einem Entweichen gehindert wird, bestimmt diejenige Stelle des Dichtungsspaltes, in welchem dieser seinen größten Durchmesser erreicht. Weiter innen liegende Flüssigkeitsbestandteile sind dadurch wirksam vor einem unbeabsichtigten Verlust geschützt, wodurch es sich empfiehlt, diese Flüssigkeitsbestandteile als Reservemenge zu betrachten, die durch die Kraft des Magnetfeldes und gegebenenfalls durch Fliehkrafteinwirkung in den vorstehend angesprochenen Spalt nachströmen, wenn sich durch unvorhergesehene Ereignisse ein Verlust einer gewissen Menge des darin enthaltenen Volumens ergibt. Eine entsprechend ausgebildete Dichtung zeichnet sich dementsprechend durch ein ausgezeichnetes Notlaufverhalten aus, was ihre Verwendung in kritischen Anwendungsbereichen ermöglicht, beispielsweise im Bereich elektronischer oder medizintechnischer Anlagen.

Die Feldliniendichte bei Magnetfeldern nimmt bekanntlich mit zunehmender, gegenseitiger Entfernung der beiden Magnetpole in einer starken Weise ab, weshalb im Rahmen der vorliegenden Erfindung Ausführungen von Dichtungen bevorzugt werden, bei denen die den Spalt in axialer Richtung begrenzenden Flächen einen gegenseitigen Abstand voneinander haben, der max. 0,5 mm beträgt. Die auf das in dem Spalt enthaltene Ferrofluid ausgeübte Haltekraft des Magnetfeldes ist dementsprechend hoch und gewährleistet in gebräuchlichen Anwendungsfällen mit ausreichender Sicherheit einen unbeabsichtigten Verlust von ferrofluidischen Flüssigkeitsbestandteilen. Es genügt die Verwendung handelsüblicher Permanentmagneten zur Erzielung einer ausreichenden Betriebssicherheit in gebräuchlichen Anwendungsfällen.

Für höherwertige Anwendungen hat es sich als vorteilhaft bewährt, wenn der Abstand eine größte Weite von max. 0,2 mm, bevorzugt von nur 0,1 mm hat. Gelangt ein unveränderter Magnet zur Anwendung, so resultiert in diesen Fällen eine um das 10- bzw. 50 fache höhere Haltekraft zur Anwendung als bei der vorstehend beschriebenen Ausführung.

Die gegenseitige, axiale Zuordnung der Dichtungsringe in axialer Richtung kann durch wenigstens einen Abstandshalter bestimmt sein, welcher vor der bestimmungsgemäßen Inbetriebnahme der Dichtung außer Funktion setzbar ist. Hierbei kann es sich um ein die Dichtungsringe in axialer Richtung aufeinander abstützendes Sicherungsstück handeln, beispielsweise um Klemmschrauben oder -stifte, welche vor Inbetriebnahme der Dichtung entfernt werden.

Das Sicherungsstück kann auch ringförmig gestaltet sein und beispielsweise aus einem Klemmring bestehen, der vor Inbetriebnahme der Dichtung zwischen einander in radialer Richtung umschließenden Flächen der beiden Dichtringe angeordnet ist und die beiden Flächen über axiale Hinterschneidungen aufeinander abstützt. Er ist vor Inbetriebnahme der Dichtung zu entfernen, was beispielsweise durch eine Zerstörung erfolgen kann.

Eine selbsttätige Einstellung der richtigen Spaltweite in axialer Richtung ergibt sich dann, wenn der eine Dichtungsring mit einem radialen Ringvorsprung versehen und im Bereich des Ringvorsprunges durch das U-förmige Profil des anderen Ringes axial umgriffen ist, wobei der eine Dichtungsring mit wenigstens einer stirnseitigen Stützfläche zum Einpressen der Dichtung in den Dichtspalt versehen und durch eine Zwischenschicht aus Gummi auf der in radialer Richtung gegenüberliegenden Gegenfläche des relativ unverdrehbaren Maschinenteiles abgestützt ist und wobei die radiale Dicke der Zwischenschicht so bemessen ist, daß die nach Beendigung des Einpressens axial zurückfedernde Zwischenschicht die Einstellung des axialen Abstandes zwishchen den beiden Dichtungsringen bewirkt. Die bisherige Notwendigkeit, im Anschluß an die Montage eine besondere Justierung vorzunehmen oder sekundäre Teile zu entfernen oder zu zerstören kann folglich entfallen. Auch ergibt sich im Bereich der aus gummielastischem Werkstoff bestehenden Zwischenschicht eine Vereinfachung des Abdichtungsproblems in bezug auf das angrenzende, relativ ruhende Maschinenteil. Dieses bedarf insbesondere in Fällen, in denen die Zwischenschicht auf der ihm zugewandten Seite mehrere, in axialer Richtung aufeinanderfolgende Rippen aufweist, weder einer besonderen Maßhaltigkeit noch einer besonders hohen Oberflächengüte.

Der Gegenstand der vorliegenden Erfindung wird nachfolgend anhand der beigefügten Zeichnungen weiter erläutert. Es zeigen jeweils in halbgeschnittener Darstellung:
- Figur 1: eine Ausführung, bei der der eine Dichtungsring durch eine gummielastische Schicht auf der abzudichtenden Welle abgestützt ist.
- Figur 2: eine Ausführung, bei der die beiden Dichtungsringe vor Inbetriebnahme der Dichtung durch gleichmäßig auf dem Umfang verteilte Madenschrauben an einer Relativverlagerung in axialer Richtung gehindert sind.
- Figur 3: eine Ausführung, bei der die beiden Dichtungsringe vor Inbetriebnahme der Dichtung durch fest angeformte, aus Kunststoff bestehende Scherstifte in axialer Richtung aufeinander abgestützt sind.

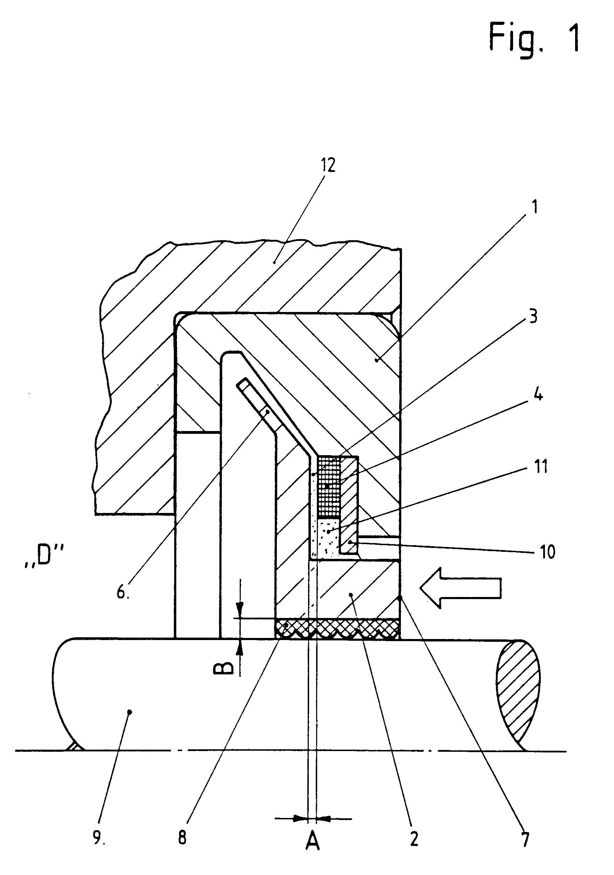

Die Ferrofluiddichtung nach Figur 1 besteht aus dem Außenring 1 und dem Innenring 2, die einander in radialer Richtung umschließen. Der Innenring 2 ist mit einem Flanschvorsprung 6 versehen, der von dem U-förmig nach innen geöffneten Profil des Außenringes 1 beiderseits in axialer Richtung umgriffen ist. Der Flanschvorsprung 6 hat in betriebsbereitem Zustand der Dichtung in axialer Richtung beiderseits einen ausgeglichenen Abstand von den jeweils gegenüberliegenden Begrenzungsflächen der nach innen offenen Nut des Außenringes 1. Des weiteren hat der Grund der Nut des Außenringes 1 einen radialen Abstand vom Außendurchmesser des Flanschvorsprunges 6.

Der Innenring 2 und der Außenring 1 können beide aus magnetisierbaren Werkstoffen bestehen, beispielsweise aus Stahl. Sie weisen einander gegenüberliegende Flächen auf, die gemeinsam einen Spalt begrenzen. In diesem ist die ferrofluidische Flüssigkeit enthalten. Falls der Innenring 2 aus einem magnetisierbaren und der Außenring 1 aus einem nichtmagnetischen Werkstoff bestehen, ergibt sich der Vorteil, daß Magnetfeldstreuungen vermieden und die ferrofluidische Flüssigkeit einer bestimmten Stelle des Spaltes in besserer Weise zugeordnet werden kann.

In dem Spalt ist relativ unverdrehbar in dem Außenring 1 ein Ringmagnet 4 gelagert, dessen dem Flanschvorsprung 6 zugewandte, sich in radialer Richtung erstreckende Begrenzungsfläche den Abstand A von dem Flanschvorsprung 6 aufweist. Hierdurch wird der sich in radialer Richtung erstreckende Spalt 3 in axialer Richtung beiderseits begrenzt. Er ist im gezeigten, betriebsbereiten Zustand der Dichtung von einer sehr geringen Weite von nur 0,15 mm.

In axialer Richtung ist zwischen dem Ringmagneten 4 und dem in derselben Radialebene liegenden, nach innen weisenden Flanschvorsprung des Außenringes 1 der kreisringförmig gestaltete Polschuh 10 angeordnet, der die radial nach innen weisende Begrenzungsfläche des Ringmagneten 4 in radialer Richtung nach innen überragt und dem Innenring 2 außenseitig relativ dicht angenähert ist. Radial innerhalb des Spaltes 3 ergibt sich hierdurch ein Ringraum 11 von vergleichsweise vergrößertem Querschnitt. Dieser ist ebenso wie der Bereich zwischen dem Polschuh 10 und dem Innenring 2 ssowie der Spalt 3 mit ferrofluidischer Flüssigkeit gefüllt, welche ein Reservevolumen für den Bereich des Spaltes 3 bildet. In diesem Bereich findet die eigentliche Abdichtung statt. Es ist daher auch nicht erforderlich, daß der Innendurchmesser des Polschuhs 10 der ihm zugewandten Seite des Innenringes 2 in einer besonders engen Weise zugeordnet ist. Es muß in diesem Bereich lediglich das Auslaufen der ferrofluidischen Flüssigkeit verhindert werden. Der abzudichtende Raum ist mit D bezeichnet.

Zwischen dem Innenring 2 und der Oberfläche der abzudichtenden Welle 9 ist eine innenseitig gerippte Zwischenschicht 8 aus Gummi angeordnet. Diese weist die radiale Schichtdicke B auf. Eine ähnliche Schicht ist zwischen der Außenseite des Außenringes 1 und dem angrenzenden Maschinenteil 12 nicht vorgesehen. In diesem Bereich muß folglich eine flüssigkeitsdichte Presspassung zwischen dem Außenring 1 und dem angrenzenden Maschinenteil 12 vorgesehen werden, um eine flüssigkeitsdichte, gegenseitige Verbindung zu gewährleisten.

Die Montage der vorstehend in ihren Einzelteilen beschriebenen Dichtung erfolgt in der Weise, daß die Dichtung auf den Außenumfang der abzudichtenden Welle 9 aufgeschoben und bis in den Bereich der Mündung der Öffnung des abzudichtenden Maschinenteiles 12 verschoben wird. Es sind dann weitergehende Einpresskräfte erforderlich, welche an der durch einen Pfeil gekennzeichneten Stelle in die Stützfläche 7 eingeleitet werden. Sie haben unter Erzeugung einer rückwärts gerichteten, elastischen Deformierung der Innenseite der Zwischenschicht 8 eine axiale Relativverlagerung des Innenringes 2 in bezug auf den Außenring 1 zur Folge, die dadurch begrenzt wird, daß es zu einer gegenseitigen, axialen Berührung zwischen dem Flanschvorsprung 6 und der ihm zugewandten, nach rechts weisenden Innenseite der ringförmigen Nut des Außenringes 1 kommt. Hierdurch wird der Außenring 1 gewaltsam mitgenommen und in die Ausnehmung des abzudichtenden Maschinenteiles 2 eingefügt. Zugleich ergibt sich eine entsprechende Verschiebung des Innenringes 2 auf der Oberfläche der abzudichtenden Welle 9.

Der Einpressvorgang wird so lange fortgesetzt, bis die einander gegenüberliegenden, radial gerichteten Stirnflächen des Außenringes 1 und des ihn aufnehmenden Maschinenteiles 12 einander berühren. Danach wird die zuvor auf die Stützfläche 7 ausgeübte Einpresskraft zurückgenommen, was dazu führt, daß sich die in der Zwischenschicht 8 vorhandenen Spannungen ausgleichen und eine rechts gerichtete Relativverlagerung des Innenringes 2 entgegen der Richtung des eingezeichneten Pfeiles 1 bewirken. Der Spalt 3 erhält hierdurch die betriebsnotwendige, axiale Weite A von 0,15 mm. Eine sofortige Inbetriebnahme der eingebauten Dichtung ist dadurch möglich.

Unter normalen Betriebsbedingungen, d.h. bei drehender Welle 9, wirkt der ringförmig ausgebildete Vorsprung 6 des Innenringes 2 als Schleuderring. Er ist zwischen dem abzudichtenden Raum D und dem Spalt 3 angeordnet, wodurch letzterer vor Druckschwankungen in dem abzudichtenden Raum D geschützt wird. Auch in einem solchen Falle ist dadurch keine nachteilige Veränderung des erzielten Abdichtungsergebnisses zu befürchten.

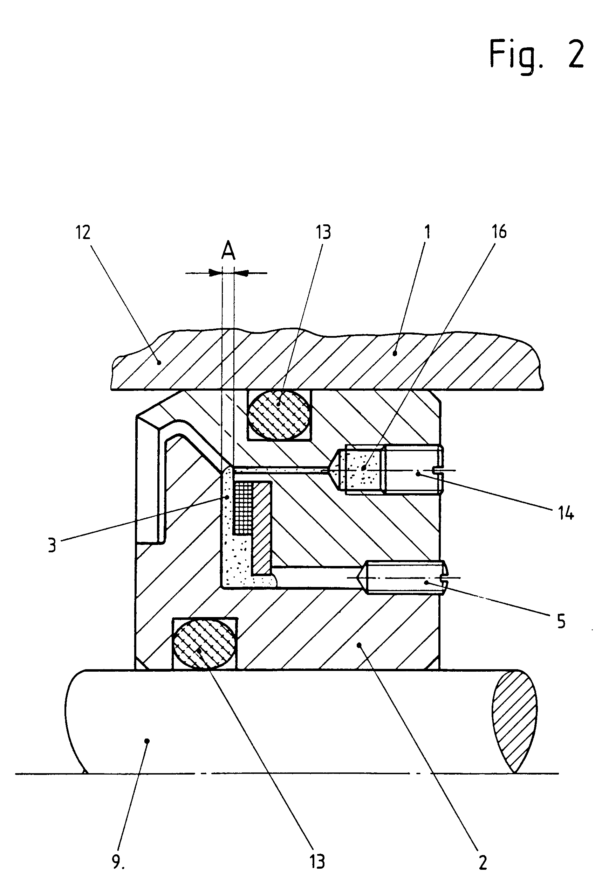

Die in Figur 2 gezeigte Ausführung besteht aus dem Außenring 1 und dem Innenring 2, die einander iin radialer Richtung umschließen und beide aus magnetisierbaren Werkstoffen bestehen. Sie sind während des Transportes und der Montage der Dichtung durch drei gleichmäßig auf dem Umfang verteilte Madenschrauben 5 gegen eine axiale und radiale Relativverlagerung in bezug aufeinander gesichert.

Sowohl der Außenring 1 als auch der Innenring 2 sind durch O-Ringdichtungen 13 gegenüber den angrenzenden Maschinenteilen 12 bzw. 9 in statischer Weise abgedichtet. Es bedarf daher keiner hochgradigen, gegenseitigen Verpressung zwischen den einander berührenden Flächen der Dichtung und der abzudichtenden Maschinenteile, um das erforderliche, statische Abdichtungsergebnis in den angesprochenen Bereichen zu erzielen. Der einbau der Dichtung durch axiales Einschieben in den Spalt zwischen den Maschinenteilen 9, 12 kann dementsprechend unter Vermeidung nennenswerter Einpresskräfte erfolgen. Anschließend werden die Madenschrauben 5 entfernt. Die eingebaute Dichtung ist damit funktionsfähig.

Der Außenring 1 der vorstehend beschriebenen Dichtung enthält des weiteren ein zusätzliches Reservoir 16 für ferrofluidische Flüssigkeit.

Dieses ist durch einen sich in axialer Richtung erstreckenden Kanal mit dem außenseitig an den Spalt 3 angrenzenden Bereich der Dichtung verbunden und gegenüber der Umgebung durch die Stellschraube 14 verschlossen. Betriebsbedingter Verlust von ferrofluidischer Flüssigkeit kann hierdurch ausgeglichen werden, indem die Stellschraube 14 so lange verdreht wird, bis sich wiederum eine vollständige Auffüllung des Spaltes 3 mit ferrofluidischer Flüssigkeit ergibt.

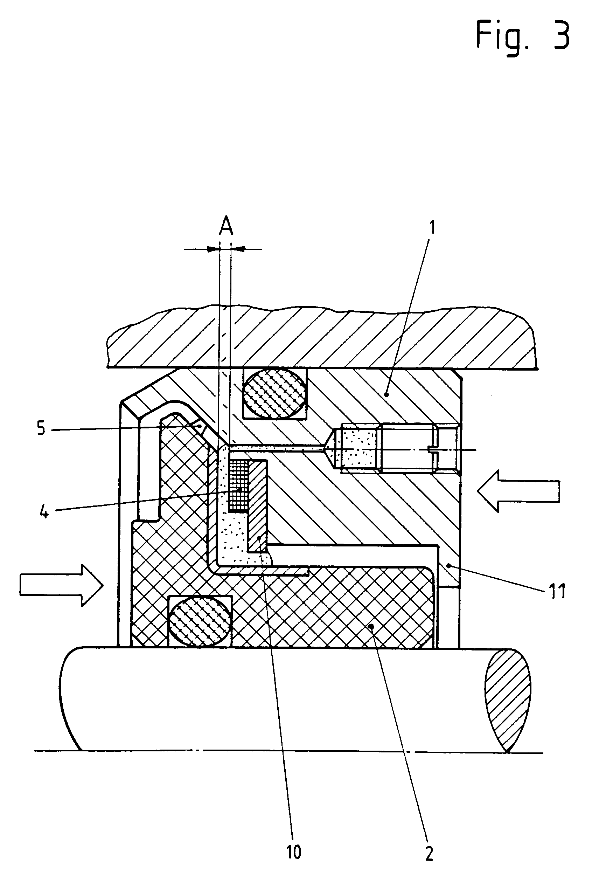

Die in Figur 3 gezeigte Dichtung ist der vorstehend beschriebenen hinsichtlich ihrer konstruktiven Gestalt ähnlich. Der Innenring 2 besteht bei dieser Ausführung jedoch aus Kunststoff, wobei im Bereich derjenigen Flächen, die dem Ringmagneten 4 und dem ringförmigen Polschuh 10 gegenüberliegen, die Oberfläche mit einer magnetisierbaren Beschichtung aus Stahl versehen sind, beispielsweise einem Blechring.

Des weiteren sind zur Gewährleistung des richtigen, gegenseitigen Abstandes A gleichmäßig auf dem Umfang verteilte Scherstifte 5 an dem Innenring 2 vorgesehen. Diese sind unmittelbar angeformt und stützen den Außenring 1 auf dem Innenring 2 in axialer Richtung ab, wenn die für den Einbau der Dichtung notwendigen Einpresskräfte über eine der durch einen offenen Pfeil gekennzeichneten Flächen aufgebracht werden. Bei Inbetriebnahme der Dichtung, d.h. bei einer Relativverdrehung des Innenringes 2 in bezug auf den Außenring 1 werden die Scherstifte 5 zerstört. Sie vermögen anschließend die Relativverdrehung nicht mehr zu behindern und ihre Bruchstücke verlassen fliehkraftbedingt den abzudichtenden Spalt. Der nach innen weisende Ringvorsprung 11 des Außenringes bildet eine Vorschaltdichtung, durch die das Eindringen grober Verschmutzungen aus der Umgebung in den Ringspalt verhindert wird.

Bei der erfindungsgemäßen Dichtung handelt es sich im engeren Sinne um eine Kassettendichtung, die somit ohne große Aufwendungen montiert und in Betrieb genommen werden kann. Ihre axiale Baulänge ist relativ gering und radiale Relativverlagerungen der sich drehenden Welle können ohne weiteres in Kauf genommen werden.

## Patentansprüche

1. Ferrofluiddichtung, bei der die relativ verdrehbaren Dichtungsringe (1, 2) einen die Rotationsachse einer Welle (9) konzentrisch umschließenden Spalt (3) begrenzen, wobei in dem Spalt ein Ferrofluid angeordnet und durch das Magnetfeld eines Ringmagneten (4) festgehalten ist, dadurch gekennzeichnet, daß der das Ferrofluid enthaltende Spalt (3) sich im wesentlichen in radialen Richtung erstreckt und mit der Rotationsachse einen Winkel von etwa 90 Grad einschließt und daß der Spalt (3) an der Stelle, wo der Spalt (3) seinen größten Außerdurchmesser erreicht radial nach außen offen und durch Flächen der Dichtungsringe (1, 2) begrenzt ist, die einen axialen Abstand (A) von max. 0,5 mm voneinander haben, so daß die auf das in dem Spalt (3) befindliche Ferrofluid ausgeübte Haltekraft des Magnetfeldes die sich während der bestimmungsgemäßen Verwendung ergebende Fliehkraft um wenigstens das 20fache übersteigt.

2. Dichtung nach Anspruch 1, dadurch gekennzeichnet, daß der Abstand (A) eine Weite von max. 0,2 mm aufweist.

3. Dichtung nach Anspruch 1 oder 2, dadurch gekennzeichnet, daß die gegenseitige, axiale Zuordnung der Dichtungsringe (1, 2) in axialer Richtung durch wenigstens einen Abstandshalter (5) bestimmt ist und daß der Abstandshalter (5) vor Inbetriebnahme der Dichtung außer Funktion setzbar ist.

4. Dichtung nach Anspruch 3, dadurch gekennzeichnet, daß der Abstandshalter (5) aus einem die Dichtungsringe (1,2) axial aufeinander abstützenden Sicherungsstück besteht.

5. Dichtung nach Anspruch 4, dadurch gekennzeichnet, daß das Sicherungsstück ringförmig ausgebildet ist.

6. Dichtung nach Anspruch 4 oder 5, dadurch gekennzeichnet, daß das Sicherungsstück entfernbar ist.

7. Dichtung nach Anspruch 4 bis 6, dadurch gekennzeichnet, daß das Sicherungsstück durch eine Relativverdrehung der Dichtungsringe (1, 2) zerstörbar ist.

8. Dichtung nach Anspruch 1 oder 2, dadurch gekennzeichnet, daß der eine Dichtungsring (2) mit einem radialen Ringvorsprung (6) versehen und durch das U-förmige Profil des anderen Ringes (1) im Bereich des Ringvorsprunges (6) axial umgriffen ist, daß der eine Dichtungsring (2) mit wenigstens einer stirnseitigen Stützfläche (7) zum Einpressen der Dichtung in den Dichtspalt zwischen den abzudichtenden Maschinenteilen versehen und durch eine Zwischenschicht (8) aus Gummi auf der in radialer Richtung gegenüberliegenden Gegenfläche des relativ unverdrehbaren Maschinenteiles (9) abgestützt ist und daß die radiale Dicke (B) der Zwischenschicht (8) so bemessen ist, daß die nach Beendigung des Einpressens zurückfedernde Zwischenschicht (8) die Einstellung des Abstandes (A) zwischen den Dichtungsringen (1, 2) bewirkt.

9. Dichtung nach Anspruch 8, dadurch gekennzeichnet, daß der Ringvorsprung (6) an wenigstens einer Stelle seines Umfanges in axialer Richtung durchbrochen ist.

## Claims

1. A ferrofluid seal, in which the relatively rotatable sealing rings (1, 2) bound a gap (3) which concentrically encircles the axis of rotation of a shaft (9), a ferrofluid being arranged in the gap and being retained by the magnetic field of an annular magnet (4), characterised in that the gap (3) containing the ferrofluid extends substantially in the radial direction and encloses an angle of about 90 degrees with the axis of rotation, and in that, at the place where the gap (3) reaches its greatest outside diameter, the gap (3) is open radially towards the outside and is bounded by surfaces of the sealing rings (1, 2) which have a maximum axial spacing (A) of 0.5 mm from one another, such that the holding force of the magnetic field exerted on the ferrofluid located in the gap (3) exceeds the centrifugal force resulting during appropriate use by at least 20 times.

2. A seal according to claim 1, characterised in that the spacing (A) has a maximum width of 0.2 mm.

3. A seal according to claim 1 or 2, characterised in that the mutual axial association of the sealing rings (1, 2) is defined in the axial direction by at least one spacer (5), and in that the spacer (5) can be put out of action prior to commissioning of the seal.

4. A seal according to claim 3, characterised in that the spacer (5) is composed of a securing piece which supports the sealing rings (1, 2) on one another axially.

5. A seal according to claim 4, characterised in that the securing piece is of annular construction.

6. A seal according to claim 4 or 5, characterised in that the securing piece can be removed.

7. A seal according to any of claims 4 to 6, characterised in that the securing piece can be destroyed by a relative rotation of the sealing rings (1, 2).

8. A seal according to claim 1 or 2, characterised in that the one sealing ring (2) is provided with a radial annular projection (6) and is surrounded axially by the U-shaped profile of the other ring (1) in the region of the annular projection (6), in that the one sealing ring (2) is provided with at least one end-side support face (7) for pressing the seal into the sealing gap between the machine parts to be sealed off and is supported by an intermediate layer (8) of rubber on the radially opposite counter face of the relatively non-rotatable machine part (9), and in that the radial thickness (B) of the intermediate layer (8) is dimensioned such that the intermediate layer (8), which springs back on completion of the pressing-in operation, causes the setting of the spacing (A) between the sealing rings (1, 2).

9. A seal according to claim 8, characterised in that the annular projection (6) is interrupted in the axial direction at least at one place on its circumference.

## Revendications

1. Joint à fluide magnétique, dans lequel les bagues d'étanchéité (1, 2) pouvant tourner l'une par rapport à l'autre délimitent un intervalle (3) entourant concentriquement l'axe de rotation d'un arbre (9), un fluide magnétique étant disposé dans cet intervalle et étant maintenu par le champ magnétique d'un aimant annulaire (4), caractérisé en ce que l'intervalle (3) contenant le fluide magnétique s'étend dans l'essentiel dans une direction radiale et fait avec l'axe de rotation un angle d'environ 90 degrés et en ce que l'intervalle (3) à l'endroit où l'intervalle (3) a son plus grand diamètre extérieur, est ouvert radialement vers l'extérieur et est délimité par des surfaces des bagues d'étanchéité (1, 2), qui sont espacées axialement l'une de l'autre d'une distance axiale (A) au maximum de 0,5 mm, de telle sorte que la force de maintien exercée par le champ magnétique sur le fluide magnétique se trouvant dans l'intervalle (3) dépasse d'au moins 20 fois la force centrifuge se produisant pendant l'utilisation conforme aux prescriptions.

2. Joint selon la revendication 1, caractérisé en ce que l'espacement (A) a une largeur au maximum de 0,2 mm.

3. Joint selon la revendication 1 ou 2, caractérisé en ce que la disposition mutuelle axiale des bagues d'étanchéité (1, 2) est déterminée dans une direction axiale par au moins un organe de maintien d'espacement (5) et en ce que la fonction de cet organe de maintien d'espacement (5) est supprimée avant la mise en service du joint.

4. Joint selon la revendication 3, caractérisé en ce que l'organe de maintien d'espacement (5) se compose d'un élément de fixation maintenant axialement l'une contre l'autre les bagues d'étanchéité (1, 2).

5. Joint selon la revendication 4, caractérisé en ce que l'élément de fixation a une forme annulaire.

6. Joint selon la revendication 4 ou 5, caractérisé en ce que l'élément de fixation peut être enlevé.

7. Joint selon une des revendications 4 à 6, caractérisé en ce que l'élément de fixation peut être détruit par une rotation relative des bagues d'étanchéité (1, 2).

8. Joint selon une des revendications 1 ou 2, caractérisé en ce qu'une des bagues d'étanchéité (2) est pourvue d'un rebord annulaire radial (6) et est entourée axialement, dans une zone du rebord annulaire (6), par le profil en forme de U de l'autre bague (1), en ce qu'une des bagues d'étanchéité (2) est pourvue d'au moins une surface frontale d'appui (7) pour l'emmanchement du joint dans l'intervalle d'étanchéité prévu entre les pièces de machine à étancher et est appuyée par une couche intermédiaire (8) de caoutchouc contre la surface opposée, située en regard dans une direction radiale, de la pièce de machine (9) relativement non tournante, et en ce que l'épaisseur radiale (B) de la couche intermédiaire (8) est dimensionnée de telle sorte que la couche intermédiaire (8), reprenant élastiquement sa forme après terminaison de l'emmanchement, assure le réglage de l'espacement (A) entre les bagues d'étanchéité (1, 2).

9. Joint selon la revendication 8, caractérisé en ce que le rebord annulaire (6) est interrompu dans une direction axiale en au moins un endroit de son pourtour.
